# EUROPÄISCHE PATENTSCHRIFT

(11) **EP 4 527 702 B1**
(45) Veröffentlichungstag und Bekanntmachung des Hinweises auf die Patenterteilung: **29.10.2025**
(21) Anmeldenummer: 24193817.4
(22) Anmeldetag: 09.08.2024
(51) Int. Cl.: B60T 8/88, B60W 10/20, B60W 50/023, B60W 50/16, B62D 6/00, B60W 50/00

(54) **X-BY-WIRE-KONTROLLSYSTEM FÜR EIN KRAFTFAHRZEUG**
X-BY-WIRE CONTROL SYSTEM FOR A MOTOR VEHICLE
SYSTÈME DE COMMANDE DE X-BY-WIRE POUR VÉHICULE AUTOMOBILE

(30) Priorität: 21.09.2023 DE 102023125680
(43) Veröffentlichungstag der Anmeldung: 26.03.2025
(73) Patentinhaber: HELLA GmbH & Co. KGaA, 59552 Lippstadt (DE)
(72) Erfinder: DEMIR, Hüseyin, 59555 Lippstadt (DE); HUSBERG, Olaf, 34414 Warburg (DE); ISEKE, Christian, 33106 Paderborn (DE); ORLOV, Sergey, 33104 Paderborn (DE); WOSTMANN, Christoph, 59557 Lippstadt (DE)
(74) Vertreter: Behr-Wenning, Gregor

(56) Entgegenhaltungen:
- EP-A1- 4 095 016
- EP-A2- 3 372 453
- DE-A1- 10 359 875
- DE-A1- 102022 103 808

## Beschreibung

Die vorliegende Erfindung bezieht sich auf ein X-by-wire-Kontrollsystem für ein Kraftfahrzeug nach dem Oberbegriff des Anspruchs 1.

Derartige X-by-wire-Kontrollsysteme für Kraftfahrzeuge sind aus dem Stand der Technik in zahlreichen Ausführungsvarianten bereits bekannt. Die bekannten X-by-wire-Kontrollsysteme für Kraftfahrzeuge dienen zur Kontrolle einer Hauptfunktion des Kraftfahrzeugs und einer vom zu erfüllenden Sicherheitsstandard im Vergleich zu der Hauptfunktion niedriger eingestuften Nebenfunktion des Kraftfahrzeugs, wobei die Hauptfunktion mittels einer Hauptfunktions-Baugruppe des Kraftfahrzeugs und die Nebenfunktion mittels einer von der Hauptfunktions-Baugruppe räumlich getrennten Nebenfunktions-Baugruppe des Kraftfahrzeugs durchführbar sind, und wobei mindestens ein Sensor der Nebenfunktions-Baugruppe funktional der Hauptfunktion zugeordnet ist.

Ein Beispiel von einem Lenk-by-Wire-Kontrollsystem ist aus DE 10 2022 103 808 A1 bekannt.

Hier setzt die vorliegende Erfindung an.

Der vorliegenden Erfindung liegt die Aufgabe zugrunde, ein X-by-wire-Kontrollsystem für ein Kraftfahrzeug zu verbessern.

Diese Aufgabe wird durch ein X-by-wire-Kontrollsystem für ein Kraftfahrzeug mit den Merkmalen des Anspruchs 1 gelöst, das dadurch gekennzeichnet ist, dass dieser mindestens eine der Hauptfunktion zugeordnete Sensor der Nebenfunktions-Baugruppe lediglich mit der Hauptfunktions-Baugruppe einerseits in Energieversorgungsverbindung zur Versorgung dieses Sensors mit Betriebsenergie und andererseits in Signalaustauschverbindung steht. Der Begriff "Hauptfunktion" bezeichnet hier Funktionen des Kraftfahrzeugs, die für das Kraftfahrzeug elementar sind, wobei damit insbesondere sicherheitsrelevante Funktionen des Kraftfahrzeugs, wie die Lenkung, der Antrieb oder das Bremssystem des Kraftfahrzeugs, zu verstehen sind. Diese Hauptfunktionen des Kraftfahrzeugs, zum Beispiel die vorgenannten Hauptfunktionen, sind aufgrund von deren Sicherheitsrelevanz beispielsweise redundant auszuführen. Dies bedeutet, dass die redundant ausgeführte Hauptfunktion auch in einem Fehlerfall, beispielsweise einem Ausfall einer Komponente der Hauptfunktions-Baugruppe zur Ausführung dieser Hauptfunktion, sicher ausführbar ist, da diese fehlerhafte Komponente durch eine dazu korrespondierende redundante Komponente zur Ausführung der Hauptfunktion im Fehlerfall automatisch ersetzt wird oder, bei parallel arbeitenden redundanten Strukturen, dass die fehlerhafte Komponente automatisch deaktiviert wird, während die ordnungsgemäß funktionierende, zu der fehlerhaften Komponente redundante Komponente weiter in Betrieb bleibt. Mit dem Begriff "Nebenfunktion" sind hier Funktionen des erfindungsgemäßen Kraftfahrzeugs gemeint, die insbesondere nicht sicherheitsrelevant sind und damit zum Beispiel nicht redundant ausgeführt sein müssen. Die Unteransprüche betreffen vorteilhafte Weiterbildungen der Erfindung. Unter räumlicher Trennung ist hier insbesondere eine derartige räumliche Trennung der Hauptfunktions-Baugruppe und der Nebenfunktions-Baugruppe zu verstehen, die eine wie auch immer geartete bauliche Zusammenfassung dieser Baugruppen nicht ermöglicht.

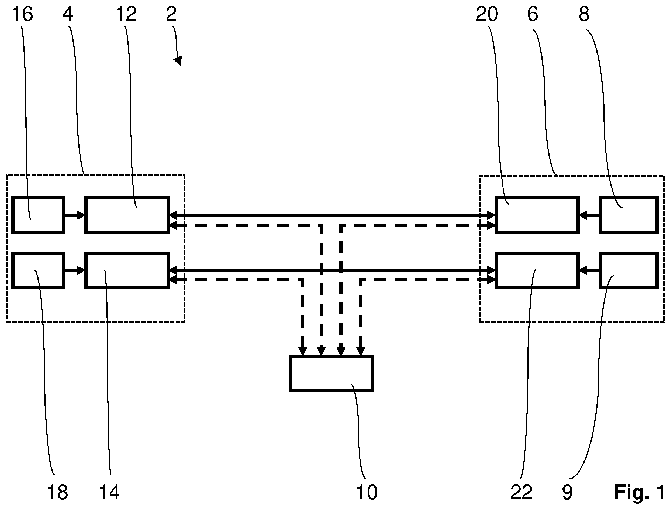

Ein wesentlicher Vorteil des erfindungsgemäßen X-by-wire-Kontrollsystems liegt insbesondere darin, dass ein X-by-wire-Kontrollsystem für ein Kraftfahrzeug verbessert ist. Der mindestens eine der Hauptfunktion funktional zugeordnete Sensor ist also einerseits baulich der Nebenfunktions-Baugruppe und andererseits funktional wie auch hinsichtlich von dessen Energieversorgung und Signalaustausch der Hauptfunktion zugeordnet. Aufgrund der erfindungsgemäßen Ausbildung des X-by-wire-Kontrollsystems ist eine vollständige Funktionalität des X-by-wire-Kontrollsystems, trotz eines reduzierten technischen Aufwands durch hinsichtlich des Grades des zu erfüllenden Sicherheitsstandards getrennt voneinander aufgebaute Systembereiche, gewährleistet. Ferner ist auch weniger Bauraum für das erfindungsgemäße X-by-wire-Kontrollsystem im Vergleich zu funktional gleichwertigen X-by-wire-Kontrollsystemen aus dem Stand der Technik erforderlich, da bei dem erfindungsgemäßen X-by-wire-Kontrollsystem beispielsweise wesentlich weniger Komponenten redundant ausgeführt werden müssen. Siehe hierzu zum Beispiel die den Stand der Technik wiedergebende Fig. 1 nebst der diesbezüglichen Erläuterungen. Somit ist das erfindungsgemäße X-by-wire-Kontrollsystem im Vergleich zum Stand der Technik kompakter und kostengünstiger realisierbar. Auch ist die Vernetzung der einzelnen Komponenten des erfindungsgemäßen X-by-wire-Kontrollsystem weniger komplex und damit weit weniger störanfällig, da beispielsweise redundante Funktionen und damit redundante Komponenten des erfindungsgemäßen X-by-wire-Kontrollsystems lediglich dort vorgesehen werden, wo diese zwingend erforderlich sind. Im Ergebnis ist mittels der Erfindung eine im Vergleich zum Stand der Technik zwar funktional ebenso leistungsstarke, aber wesentlich vereinfachte mechanische und elektronische Anordnung verwirklicht. Dies gilt auch für die elektronische Verbindungstechnik.

Grundsätzlich ist das erfindungsgemäße X-by-wire-Kontrollsystem eines Kraftfahrzeugs nach Art, Funktionsweise, Material und Dimensionierung in weiten geeigneten Grenzen frei wählbar. Zum Beispiel sie hier auf als Elektrofahrzeuge ausgebildete Kraftfahrzeuge hingewiesen. Siehe hierzu die Vielzahl von voneinander verschiedenen Funktionen bei modernen Kraftfahrzeugen sowie die Herausforderungen von X-by-wire-Systemen im Allgemeinen.

Eine besonders vorteilhafte Weiterbildung des erfindungsgemäßen X-by-wire-Kontrollsystems sieht vor, dass der Sicherheitsstandard der Hauptfunktion und der Nebenfunktion als ein ASIL-Sicherheitslevel ausgebildet ist, wobei das ASIL-Sicherheitslevel der Hauptfunktion als ASIL D und das ASIL-Sicherheitslevel der Nebenfunktion niedriger als ASIL D, bevorzugt niedriger oder gleich ASIL B, ausgebildet ist. Auf diese Weise ist der für Kraftfahrzeuge in dem erfindungsgemäßen Zusammenhang relevanteste Sicherheitsstandard angegeben. Die Abkürzung "ASIL" steht dabei für Automotive Safety Integrity Level. ASIL ist aktuell in insgesamt vier Sicherheitslevel A bis D eingeteilt, wobei das Sicherheitslevel A das niedrigste Sicherheitslevel und das Sicherheitslevel D das höchste Sicherheitslevel ist. Mittels der bevorzugten Ausführungsform dieser Weiterbildung ist eine besonders vorteilhafte Ausbildung der Erfindung angegeben, da hier ein erheblicher Unterschied in den sicherheitstechnischen Anforderungen für die Nebenfunktion im Vergleich zu der Hauptfunktion besteht, so dass die Nebenfunktion gegenüber der Hauptfunktion mit viel weniger Aufwand realisierbar ist.

Eine weitere vorteilhafte Weiterbildung des erfindungsgemäßen X-by-wire-Kontrollsystems sieht vor, dass das X-by-wire-Kontrollsystem als ein Steer-by-wire-Kontrollsystem ausgebildet ist, bevorzugt, dass das Steer-by-wire-Kontrollsystem als ein Lenksystem des Kraftfahrzeugs ausgebildet ist, wobei die kontrollierte Nebenfunktion als eine Lenkrad-Feedbackfunktion zur mechanischen Einwirkung mittels eines Lenkrads des Kraftfahrzeugs auf einen Fahrer des Kraftfahrzeugs und die kontrollierte Hauptfunktion als eine Radlenkfunktion zur Lenkung mindestens eines Rades des Kraftfahrzeugs in Abhängigkeit eines von dem Fahrer eingeschlagenen Lenkwinkels des Lenkrads ausgebildet sind. Hierdurch ist die Erfindung auf einem für Kraftfahrzeuge sicherheitstechnisch besonders sensiblen Feld vorteilhaft einsetzbar. Dies gilt besonders für die bevorzugte Ausführungsform dieser Weiterbildung. Bei Lenksystemen von Kraftfahrzeugen ist das erfindungsgemäße X-by-wire-Kontrollsystem besonders vorteilhaft einsetzbar, da zwischen dem Lenkrad auf der einen Seite und dem mindestens einen lenkbaren Rad auf der anderen Seite keinerlei mechanische Verbindung mehr vorhanden ist.

Eine vorteilhafte Weiterbildung der vorgenannten Weiterbildung des erfindungsgemäßen X-by-wire-Kontrollsystems sieht vor, dass die Hauptfunktions-Baugruppe kraftübertragend an dem mindestens einen lenkbaren Rad des Kraftfahrzeugs angeordnet ist, bevorzugt, dass die Hauptfunktions-Baugruppe kraftübertragend an einer mit dem mindestens einem lenkbaren Rad kraftübertragend verbundenen Lenkachse des Kraftfahrzeugs angeordnet ist. Auf diese Weise ist die erforderliche kraftübertragende Verbindung zwischen der Hauptfunktions-Baugruppe auf der einen Seite und dem zu lenkenden Rad des Kraftfahrzeugs auf der anderen Seite auf konstruktiv und fertigungstechnisch sehr einfache Art umsetzbar. Dies gilt insbesondere für die bevorzugte Ausführungsform dieser Weiterbildung.

Analog dazu sieht eine vorteilhafte Weiterbildung der beiden letztgenannten Weiterbildungen des erfindungsgemäßen X-by-wire-Kontrollsystems vor, dass die Nebenfunktions-Baugruppe kraftübertragend an dem Lenkrad des Kraftfahrzeugs angeordnet ist, bevorzugt, dass die Nebenfunktions-Baugruppe an einer mit dem Lenkrad kraftübertragend verbundenen Lenksäule des Kraftfahrzeugs angeordnet ist. Hierdurch ist auch die erforderliche kraftübertragende Verbindung zwischen der Nebenfunktions-Baugruppe auf der einen Seite und dem Lenkrad des Kraftfahrzeugs auf der anderen Seite auf konstruktiv und fertigungstechnisch sehr einfache Art umsetzbar. Dies gilt wiederum insbesondere für die bevorzugte Ausführungsform dieser Weiterbildung.

Alternativ zu einem als Steer-by-wire-Kontrollsystem ausgebildeten erfindungsgemäßen X-by-wire-Kontrollsystem sieht eine weitere vorteilhafte Weiterbildung des erfindungsgemäßen X-by-wire-Kontrollsystems nach Anspruch 1 oder 2 vor, dass das X-by-wire-Kontrollsystem als ein Brake-by-wire-Kontrollsystem ausgebildet ist, bevorzugt, dass die kontrollierte Hauptfunktion als eine Radbremsfunktion zur Bremsung mindestens eines Rades des Kraftfahrzeugs mittels eines Bremsaktors des vorgenannten Kontrollsystems in Abhängigkeit eines von einem Fahrer des Kraftfahrzeugs erteilten oder mittels des Kontrollsystems automatisch erzeugten Bremsbefehls ausgebildet ist. Bei der mittels des als Brake-by-wire-Kontrollsystem ausgebildeten erfindungsgemäßen X-by-wire-Kontrollsystems kontrollierten Nebenfunktion kann es sich beispielsweise um eine zu den obigen Ausführungen zu einem als Steer-by-wire-Kontrollsystem ausgebildeten erfindungsgemäßen X-by-wire-Kontrollsystem analoge Nebenfunktion handeln. Entsprechend kann hier auf die diesbezüglichen Ausführungen in dem vorliegenden Anmeldungstext verwiesen werden.

Eine andere besonders vorteilhafte Weiterbildung des erfindungsgemäßen X-by-wire-Kontrollsystems sieht vor, dass die Hauptfunktions-Baugruppe redundant ausgebildet ist, bevorzugt, dass die Hauptfunktions-Baugruppe mindestens zwei Steuergeräte mit jeweils mindestens einer Recheneinheit zur Auswertung von an dem jeweiligen Steuergerät anliegenden Ausgangssignalen mindestens eines zu der Hauptfunktion korrespondierenden Sensors des X-by-wire-Kontrollsystems und zur Ansteuerung mindestens einer Leistungselektronik eines zu der Hauptfunktion korrespondierenden Aktors des X-by-wire-Kontrollsystems mittels Ansteuersignalen in Abhängigkeit der vorgenannten Ausgangssignale zur Ausführung dieser Hauptfunktion des Kraftfahrzeugs aufweist. Auf diese Weise ist ein hohes Sicherheitslevel des verwendeten Sicherheitsstandards auf sehr wirksame Art umsetzbar, da mittels der redundanten Ausbildung der Hauptfunktions-Baugruppe ein sehr hohes Maß an Ausfallsicherheit bei der Hauptfunktion gewährleistet ist. Dies gilt insbesondere für die bevorzugte Ausführungsform dieser Weiterbildung.

Im Unterschied dazu sieht eine weitere vorteilhafte Weiterbildung des erfindungsgemäßen X-by-wire-Kontrollsystems vor, dass hinsichtlich der Nebenfunktions-Baugruppe lediglich der mindestens eine der Hauptfunktion zugeordnete Sensor der Nebenfunktions-Baugruppe redundant ausgebildet ist, bevorzugt, dass ein erster Sensor dieses mindestens einen Sensors mit einem ersten Steuergerät der Hauptfunktions-Baugruppe und ein von dem ersten Sensor verschiedener zweiter Sensor dieses mindestens einen Sensors mit einem zweiten Steuergerät der Hauptfunktions-Baugruppe in Energieübertragungsverbindung und Signalübertragungsverbindung steht, besonders bevorzugt, dass die Nebenfunktions-Baugruppe lediglich ein Steuergerät mit lediglich einer einzigen Recheneinheit zur Auswertung von an diesem Steuergerät anliegenden Ausgangssignalen mindestens eines zu der Nebenfunktion korrespondierenden Sensors des X-by-wire-Kontrollsystems und zur Ansteuerung einer Leistungselektronik eines zu der Nebenfunktion korrespondierenden Aktors des X-by-wire-Kontrollsystems mittels Ansteuersignalen in Abhängigkeit der vorgenannten Ausgangssignale zur Ausführung dieser Nebenfunktion des Kraftfahrzeugs aufweist. Hierdurch ist die Komplexität des erfindungsgemäßen X-by-wire-Kontrollsystems, trotz Beibehaltung des für die Hauptfunktion erforderlichen hohen Sicherheitslevels des verwendeten Sicherheitsstandards, minimiert. Entsprechend wird die Redundanz auf die für die Hauptfunktion relevanten Komponenten des erfindungsgemäßen X-by-wire-Kontrollsystems reduziert. Dies gilt besonders für die bevorzugte Ausführungsform dieser Weiterbildung, bei der der mindestens eine funktional der Hauptfunktion zugeordnete Sensor, nämlich als der erste und der zweite Sensor sowie deren jeweilige energetische und signaltechnische Anbindung an die Hauptfunktions-Baugruppe, redundant ausgeführt ist. Insbesondere bei der besonders bevorzugten Ausführungsform dieser Weiterbildung ist der konstruktive, fertigungstechnische und schaltungstechnische Aufwand bei der Realisierung der Nebenfunktion minimiert.

Eine vorteilhafte Weiterbildung der vorgenannten Weiterbildung des erfindungsgemäßen X-by-wire-Kontrollsystems sieht vor, dass die Nebenfunktions-Baugruppe, zu einer weiteren Funktion des Kraftfahrzeugs korrespondierend, zusätzlich mindestens einen weiteren Sensor, eine weitere Leistungselektronik und einen dazu korrespondierenden weiteren Aktor aufweist und die vorgenannte Recheneinheit zusätzlich zur Auswertung von an diesem Steuergerät anliegenden Ausgangssignalen des mindestens einen weiteren Sensors und zur Ansteuerung der weiteren Leistungselektronik des weiteren Aktors mittels Ansteuersignalen in Abhängigkeit der vorgenannten Ausgangssignale zur Ausführung dieser weiteren Funktion des Kraftfahrzeugs ausgebildet ist. Auf diese Weise ist die Funktionalität der Nebenfunktions-Baugruppe erhöht, so dass im Ergebnis weniger Komponenten und damit weniger Bauraum für eine funktionale Erweiterung des erfindungsgemäßen X-by-wire-Kontrollsystems erforderlich sind.

Grundsätzlich ist die vorgenannte weitere Funktion des erfindungsgemäßen X-by-wire-Kontrollsystems ebenfalls nach Art, Funktionsweise, Material und Dimensionierung in weiten geeigneten Grenzen frei wählbar. Beispielsweise kann die weitere Funktion als eine andere Nebenfunktion, beispielsweise eine Klimatisierungsfunktion für eine Fahrgastzelle des Kraftfahrzeugs oder dergleichen, ausgebildet sein. Siehe hierzu auch die Erläuterungen zu Nebenfunktionen in dem hier relevanten Kontext in der Beschreibungseinleitung.

Eine vorteilhafte Weiterbildung der letztgenannten Weiterbildung des erfindungsgemäßen X-by-wire-Kontrollsystems sieht jedoch vor, dass die weitere Funktion als eine Lenkradverstellfunktion ausgebildet ist, bevorzugt, dass die Lenkradverstellfunktion zur Verstellung einer Neigung des Lenkrads und/oder zur Überführung des Lenkrads von einer Verstaulage des Lenkrads in eine Gebrauchslage des Lenkrads und umgekehrt geeignet ausgebildet ist. Hierdurch ist eine besonders vorteilhafte Kombination der Nebenfunktions-Baugruppe auf der einen Seite und der weiteren Funktion auf der anderen Seite angegeben, da die Lenkradverstellfunktion, ähnlich wie die beispielsweise als Lenkrad-Feedbackfunktion ausgebildete Nebenfunktion, kraftübertragend an dem Lenkrad des Kraftfahrzeugs angreift. Dies gilt insbesondere für die bevorzugte Ausführungsform dieser Weiterbildung.

Ferner sieht eine andere besonders vorteilhafte Weiterbildung des erfindungsgemäßen X-by-wire-Kontrollsystems vor, dass die Hauptfunktions-Baugruppe und/oder die Nebenfunktions-Baugruppe jeweils eine erste Baueinheit und eine von der ersten Baueinheit verschiedene zweite Baueinheit umfassen/umfasst, wobei in der ersten Baueinheit mindestens ein Sensor der jeweiligen Baugruppe, bevorzugt alle Sensoren der jeweiligen Baugruppe, und in der zweiten Baueinheit ein davon verschiedener Rest der jeweiligen Baugruppe baulich integriert ist. Auf diese Weise ist eine sehr sinnvolle bauliche Unterteilung der Hauptfunktions-Baugruppe und/oder der Nebenfunktions-Baugruppe angegeben, da sich der mindestens eine Sensor der Hauptfunktion sehr gut in einer von einem Rest der dazu korrespondierenden Hauptfunktions-Baugruppe verschiedenen Baueinheit, beispielsweise als ein Sensorpaket mit einer Mehrzahl von Sensoren, zusammenfassen lässt. Gleiches gilt für die Nebenfunktions-Baugruppe, bei der sowohl der mindestens eine funktional der Hauptfunktion zugeordnete Sensor mit mindestens einem der Nebenfunktion zugeordneten Sensor in einer von einem Rest der Nebenfunktions-Baugruppe verschiedenen Baueinheit zusammengefasst ist.

Anhand der beigefügten, grob schematischen Zeichnung wird die Erfindung nachfolgend näher erläutert. Dabei zeigt:
- Fig. 1: ein X-by-wire-Kontrollsystem gemäß dem Stand der Technik in einem Verfahrensschaltbild,
- Fig. 2: ein Ausführungsbeispiel des erfindungsgemäßen X-by-wire-Kontrollsystems in einem zur Fig. 1 analogen Verfahrensschaltbild und
- Fig. 3: das Ausführungsbeispiel gemäß Fig. 2 in einem detaillierterem, teilweisen Verfahrensschaltbild.

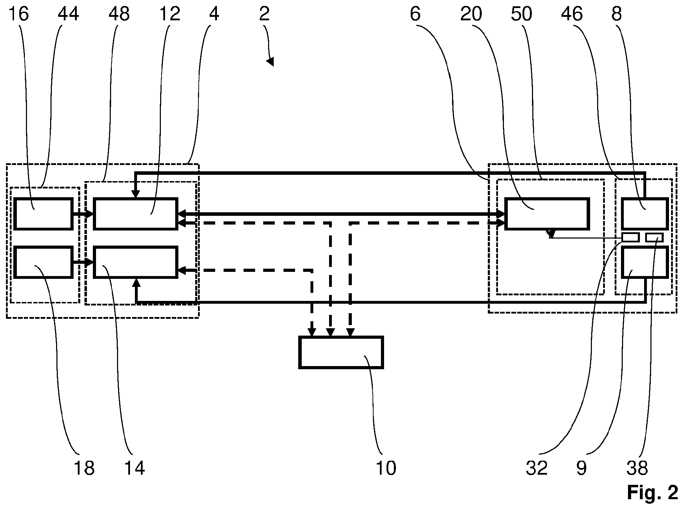

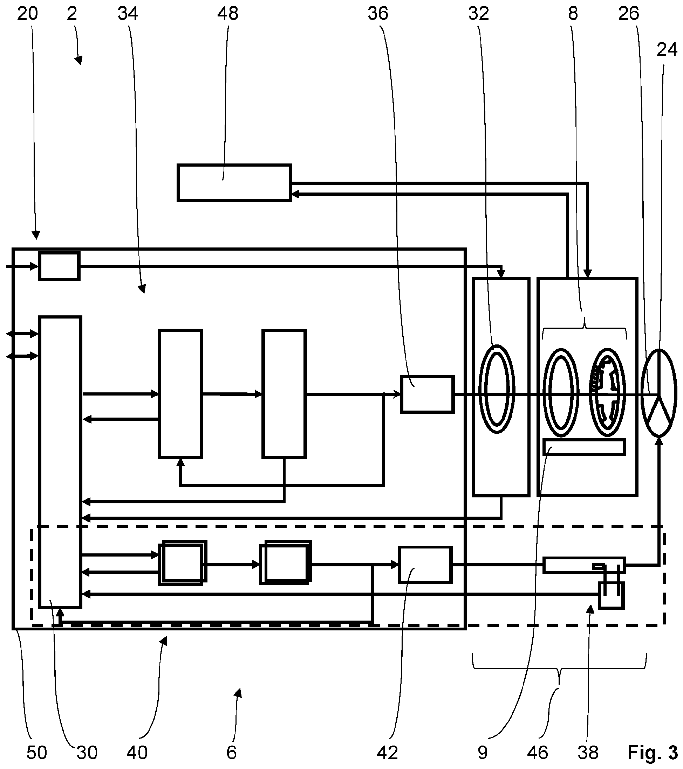

In den Fig. 2 und 3 ist ein Ausführungsbeispiel des erfindungsgemäßen X-by-wire-Kontrollsystems rein exemplarisch dargestellt.

Zwecks Abgrenzung ist der Stand der Technik zunächst in der Fig. 1 dargestellt. Wie daraus ersichtlich ist, ist das aus dem Stand der Technik bekannte X-by-wire-Kontrollsystem 2 eines nicht näher dargestellten Kraftfahrzeugs zur Kontrolle einer Hauptfunktion des Kraftfahrzeugs und einer vom zu erfüllenden Sicherheitsstandard im Vergleich zu der Hauptfunktion niedriger eingestuften Nebenfunktion des Kraftfahrzeugs geeignet ausgebildet, wobei die Hauptfunktion mittels einer Hauptfunktions-Baugruppe 4 des Kraftfahrzeugs und die Nebenfunktion mittels einer von der Hauptfunktions-Baugruppe 4 räumlich getrennten Nebenfunktions-Baugruppe 6 des Kraftfahrzeugs durchführbar sind, und wobei mindestens ein Sensor 8, 9 der Nebenfunktions-Baugruppe 6 funktional der Hauptfunktion zugeordnet ist. Ein von dem X-by-wire-Kontrollsystem 2 verschiedener Rest des Kraftfahrzeugs ist in der Fig. 1 mit dem Bezugszeichen 10 symbolisiert.

Das X-by-wire-Kontrollsystem 2 ist hier als ein Steer-by-wire-Kontrollsystem ausgebildet, wobei das Steer-by-wire-Kontrollsystem als ein Lenksystem des Kraftfahrzeugs ausgebildet ist, und wobei die kontrollierte Nebenfunktion als eine Lenkrad-Feedbackfunktion zur mechanischen Einwirkung mittels eines in der Fig. 1 nicht dargestellten Lenkrads des Kraftfahrzeugs auf einen nicht dargestellten Fahrer des Kraftfahrzeugs und die kontrollierte Hauptfunktion als eine Radlenkfunktion zur Lenkung mindestens eines nicht dargestellten Rades des Kraftfahrzeugs in Abhängigkeit eines von dem Fahrer eingeschlagenen Lenkwinkels des Lenkrads ausgebildet sind.

Die Hauptfunktions-Baugruppe 4 ist zwecks Erfüllung des Sicherheitslevels D von einem als ASIL ausgebildeten Sicherheitsstandard unter anderem redundant ausgebildet, wobei die Hauptfunktions-Baugruppe 4 mindestens zwei redundante Steuergeräte 12, 14 mit jeweils mindestens einer nicht dargestellten Recheneinheit zur Auswertung von an dem jeweiligen Steuergerät 12, 14 anliegenden Ausgangssignalen mindestens eines zu der Hauptfunktion korrespondierenden Sensors 8, 9, 16, 18 des bekannten X-by-wire-Kontrollsystems 2 und zur Ansteuerung mindestens einer nicht dargestellten Leistungselektronik eines zu der Hauptfunktion korrespondierenden und ebenfalls nicht dargestellten Aktors des bekannten X-by-wire-Kontrollsystems 2 mittels Ansteuersignalen in Abhängigkeit der vorgenannten Ausgangssignale zur Ausführung dieser Hauptfunktion des Kraftfahrzeugs aufweist. Die Hauptfunktions-Baugruppe 4 ist ferner kraftübertragend an dem mindestens einen lenkbaren Rad des Kraftfahrzeugs angeordnet, wobei die Hauptfunktions-Baugruppe 4 kraftübertragend an einer mit dem mindestens einem lenkbaren Rad kraftübertragend verbundenen, ebenfalls nicht dargestellten Lenkachse des Kraftfahrzeugs angeordnet ist.

Die Nebenfunktions-Baugruppe 6 ist, analog zu der Hauptfunktions-Baugruppe 4, ebenfalls redundant ausgebildet, nämlich derart, dass die Nebenfunktions-Baugruppe 6 hier zwei redundante Steuergeräte 20, 22 mit jeweils mindestens einer nicht dargestellten Recheneinheit zur Auswertung von an dem jeweiligen Steuergerät 20, 22 anliegenden Ausgangssignalen mindestens eines zu der Nebenfunktion korrespondierenden, in der Fig. 1 nicht dargestellten Sensors des bekannten X-by-wire-Kontrollsystems 2 und zur Ansteuerung mindestens einer nicht dargestellten Leistungselektronik eines zu der Nebenfunktion korrespondierenden und ebenfalls nicht dargestellten Aktors des bekannten X-by-wire-Kontrollsystems 2 mittels Ansteuersignalen in Abhängigkeit der vorgenannten Ausgangssignale zur Ausführung dieser Nebenfunktion des Kraftfahrzeugs aufweist. Die ebenfalls redundante Ausführung der Nebenfunktions-Baugruppe 6 ist gemäß dem Stand der Technik erforderlich, um das oben genannte Sicherheitslevel D für die Hauptfunktion zu gewährleisten, da die Sensoren 8, 9 neben den Sensoren 16, 18 ebenfalls der Hauptfunktion funktional zugeordnet sind. Die Nebenfunktions-Baugruppe 6 ist ferner kraftübertragend an dem Lenkrad des Kraftfahrzeugs angeordnet, wobei die Nebenfunktions-Baugruppe 6 an einer mit dem Lenkrad kraftübertragend verbundenen, ebenfalls nicht dargestellten Lenksäule des Kraftfahrzeugs angeordnet ist.

Wie aus der Fig. 1 ersichtlich ist, werden die der Hauptfunktion zugeordneten Sensoren 8, 9 mittels der Steuergeräte 20, 22 einerseits mit Energie versorgt und andererseits werden Ausgangssignale der Sensoren 8, 9 indirekt mittels der Steuergeräte 20, 22 zur Hauptfunktions-Baugruppe 4 weitergeleitet.

Die in der Fig. 1 dargestellte Ausführung gemäß dem Stand der Technik weist verschiedene Nachteile auf. Siehe hierzu die diesbezüglichen Ausführungen in der Beschreibungseinleitung. Dem wird mittels der Erfindung gemäß dem vorliegenden Ausführungsbeispiel abgeholfen.

Im Nachfolgenden wird das Ausführungsbeispiel der Erfindung anhand der Fig. 2 und 3 näher erläutert. Zu dem Stand der Technik gemäß der Fig. 1 gleiche oder gleichwirkende Bauteile, auch Komponenten genannt, sind in den Fig. 2 und 3 mit den gleichen Bezugszeichen versehen.

Analog zu dem Stand der Technik gemäß der Fig. 1 dient das X-by-wire Kontrollsystem 2 des Ausführungsbeispiels zur Kontrolle einer Hauptfunktion des Kraftfahrzeugs und einer vom zu erfüllenden Sicherheitsstandard im Vergleich zu der Hauptfunktion niedriger eingestuften Nebenfunktion des Kraftfahrzeugs, wobei die Hauptfunktion mittels einer Hauptfunktions-Baugruppe 4 des Kraftfahrzeugs und die Nebenfunktion mittels einer von der Hauptfunktions-Baugruppe 4 räumlich getrennten Nebenfunktions-Baugruppe 6 des Kraftfahrzeugs durchführbar sind, und wobei mindestens ein Sensor 8, 9 der Nebenfunktions-Baugruppe 6 funktional der Hauptfunktion zugeordnet ist.

Erfindungsgemäß steht dieser mindestens eine der Hauptfunktion zugeordnete Sensor 8, 9 der Nebenfunktions-Baugruppe 6 lediglich mit der Hauptfunktions-Baugruppe 4 einerseits in Energieversorgungsverbindung zur Versorgung dieses Sensors 8, 9 mit Betriebsenergie und andererseits in Signalaustauschverbindung. Siehe hierzu die Fig. 2.

Der Sicherheitsstandard der Hauptfunktion und der Nebenfunktion ist hier ebenfalls als ein ASIL-Sicherheitslevel ausgebildet, wobei das ASIL-Sicherheitslevel der Hauptfunktion als ASIL D und das ASIL-Sicherheitslevel der Nebenfunktion niedriger als ASIL D, nämlich als ASIL B, ausgebildet ist.

Ferner ist das X-by-wire-Kontrollsystem 2 gemäß des vorliegenden Ausführungsbeispiels, analog zu dem Stand der Technik gemäß der Fig. 1, als ein Steer-by-wire-Kontrollsystem ausgebildet, wobei das Steer-by-wire-Kontrollsystem als ein Lenksystem des Kraftfahrzeugs ausgebildet ist, und wobei die kontrollierte Nebenfunktion als eine Lenkrad-Feedbackfunktion zur mechanischen Einwirkung mittels eines lediglich in der Fig. 3 dargestellten Lenkrads 24 des Kraftfahrzeugs auf einen nicht dargestellten Fahrer des Kraftfahrzeugs und die kontrollierte Hauptfunktion als eine Radlenkfunktion zur Lenkung mindestens eines nicht dargestellten Rades des Kraftfahrzeugs in Abhängigkeit eines von dem Fahrer eingeschlagenen Lenkwinkels des Lenkrads 24 ausgebildet sind.

Die Hauptfunktions-Baugruppe 4 ist wiederum kraftübertragend an dem mindestens einen lenkbaren Rad des Kraftfahrzeugs angeordnet, wobei die Hauptfunktions-Baugruppe 4 kraftübertragend an einer mit dem mindestens einem lenkbaren Rad kraftübertragend verbundenen, nicht dargestellten Lenkachse des Kraftfahrzeugs angeordnet ist. Ferner ist die Hauptfunktions-Baugruppe 4 ebenfalls redundant ausgebildet, nämlich derart, dass die Hauptfunktions-Baugruppe 4 zwei Steuergeräte 12, 14 mit jeweils mindestens einer nicht dargestellten Recheneinheit zur Auswertung von an dem jeweiligen Steuergerät 12, 14 anliegenden Ausgangssignalen mindestens eines zu der Hauptfunktion korrespondierenden Sensors 8, 9, 16, 18 des X-by-wire-Kontrollsystems 2 und zur Ansteuerung mindestens einer nicht dargestellten Leistungselektronik eines zu der Hauptfunktion korrespondierenden und ebenfalls nicht dargestellten Aktors des X-by-wire-Kontrollsystems 2 mittels Ansteuersignalen in Abhängigkeit der vorgenannten Ausgangssignale zur Ausführung dieser Hauptfunktion des Kraftfahrzeugs aufweist.

Die Nebenfunktions-Baugruppe 6 ist wiederum kraftübertragend an dem Lenkrad 24 des Kraftfahrzeugs angeordnet, wobei die Nebenfunktions-Baugruppe 6 an einer mit dem Lenkrad 24 kraftübertragend verbundenen Lenksäule 26 des Kraftfahrzeugs angeordnet ist. Siehe hierzu die Fig. 3. Hinsichtlich der Nebenfunktions-Baugruppe 6 gemäß dem vorliegenden Ausführungsbeispiel der Erfindung ist lediglich der mindestens eine der Hauptfunktion zugeordnete Sensor 8, 9 der Nebenfunktions-Baugruppe 6 redundant ausgebildet, nämlich derart, dass ein erster Sensor 8 dieses mindestens einen Sensors 8, 9 mit dem ersten Steuergerät 12 der Hauptfunktions-Baugruppe 4 und ein von dem ersten Sensor 8 verschiedener zweiter Sensor 9 dieses mindestens einen Sensors 8, 9 mit dem zweiten Steuergerät 14 der Hauptfunktions-Baugruppe 4 in Energieübertragungsverbindung und Signalübertragungsverbindung steht. Die Nebenfunktions-Baugruppe 6 weist im Unterschied zu der Hauptfunktions-Baugruppe 4 lediglich ein Steuergerät 20 mit lediglich einer einzigen Recheneinheit 30 zur Auswertung von an diesem Steuergerät 20 anliegenden Ausgangssignalen mindestens eines zu der Nebenfunktion korrespondierenden Sensors 32 des X-by-wire-Kontrollsystems 2 und zur Ansteuerung einer Leistungselektronik 34 eines zu der Nebenfunktion korrespondierenden Aktors 36 des X-by-wire-Kontrollsystems 2 mittels Ansteuersignalen in Abhängigkeit der vorgenannten Ausgangssignale zur Ausführung dieser Nebenfunktion des Kraftfahrzeugs auf.

Ferner kann die Nebenfunktions-Baugruppe 6, wie in dem vorliegenden Ausführungsbeispiel, zu einer weiteren Funktion des Kraftfahrzeugs korrespondierend, zusätzlich mindestens einen weiteren Sensor 38, eine weitere Leistungselektronik 40 und einen dazu korrespondierenden weiteren Aktor 42 aufweisen, wobei die vorgenannte Recheneinheit 30 zusätzlich zur Auswertung von an diesem Steuergerät 20 anliegenden Ausgangssignalen des mindestens einen weiteren Sensors 38 und zur Ansteuerung der weiteren Leistungselektronik 40 des weiteren Aktors 42 mittels Ansteuersignalen in Abhängigkeit der vorgenannten Ausgangssignale zur Ausführung dieser weiteren Funktion des Kraftfahrzeugs ausgebildet ist. Die weitere Funktion ist hier als eine Lenkradverstellfunktion ausgebildet, wobei die Lenkradverstellfunktion zur Verstellung einer Neigung des Lenkrads 24 und zur Überführung des Lenkrads 24 von einer Verstaulage des Lenkrads 24 in eine Gebrauchslage des Lenkrads 24 und umgekehrt geeignet ausgebildet ist. Die zu der weiteren Funktion korrespondierenden Komponenten der Nebenfunktions-Baugruppe 6 sind in der Fig. 3 mittels einer gestrichelten Linie eingegrenzt. Selbstverständlich sind auch Ausführungsformen der Erfindung denkbar, bei denen die Nebenfunktions-Baugruppe keine weitere Funktion ausführt.

Bei den dargestellten und nicht dargestellten Aktoren 36, 42 handelt es sich jeweils um einen Elektromotor; bei den Sensoren 8, 9, 16, 18, 32 handelt es sich jeweils um sogenannte Motorpositionssensoren. Die Sensoren 8, 9 einerseits und 16, 18 andererseits entsprechen jeweils einer Redundanz. Die Sensoren können ferner zumindest teilweise mehrfach, also redundant, ausgebildet sein, um so die Redundanz zusätzlich zu erhöhen. Insbesondere können die einzelnen Sensoren 8, 9, 16, 18, 32, 38 jeweils auf voneinander verschiedenen physikalischen Messprinzipien beruhen, so dass sich dadurch eine Verbesserung der Ausfallsicherheit einerseits durch diese Technologiediversität der Sensoren 8, 9, 16, 18, 32, 38 und andererseits durch die vorgenannte Redundanzen ergibt. Analog zu den vorgenannten Komponenten sind die diese Komponenten mit anderen Komponenten des erfindungsgemäßen X-by-wire-Kontrollsystems 2 energieübertragend und/oder signalübertragend verbindenden elektrischen Leitungen und dergleichen ebenfalls auf dem Fachmann an sich bekannte Art und Weise redundant ausführbar.

Darüber hinaus umfassen die Hauptfunktions-Baugruppe 4 und die Nebenfunktions-Baugruppe 6 jeweils eine erste Baueinheit 44, 46 und eine von der ersten Baueinheit 44, 46 verschiedene zweite Baueinheit 48, 50, wobei in der ersten Baueinheit 44, 46 jeweils alle Sensoren 16, 18 und 8, 9, 32, 38 der jeweiligen Baugruppe 4, 6 und in der zweiten Baueinheit 48, 50 ein davon verschiedener Rest der jeweiligen Baugruppe 4, 6 baulich integriert ist. Siehe hierzu die Fig. 2 und 3 in einer Zusammenschau.

Während die Hauptfunktions-Baugruppe 4 insgesamt das ASIL-Sicherheitslevel D aufweist, ist bei der Nebenfunktions-Baugruppe 6 lediglich der mindestens eine der Hauptfunktion funktional zugeordnete Sensor, nämlich der Sensor 8 und der dazu redundant ausgebildete Sensor 9, gemäß ASIL-Sicherheitslevel D ausgebildet. Im Unterschied dazu sind die zweite Baueinheit 50 sowie die zu der Nebenfunktion und zu der weiteren Funktion korrespondierenden Sensoren 32 und 38 lediglich gemäß ASIL-Sicherheitslevel B ausgebildet.

Im Nachfolgenden wird die Funktionsweise des erfindungsgemäßen X-by-wire-Kontrollsystems gemäß dem vorliegenden Ausführungsbeispiel anhand der Fig. 2 und 3 näher erläutert.

Mittels der Lenkrad-Feedbackfunktion werden mittels des mindestens einen Sensors 8, 9, 32 Sensorinformationen am Lenkrad 24 gesammelt, um einerseits mittels des Aktors 36 ein Feedback-Drehmoment für den Fahrer zu generieren und andererseits die Lenkwünsche des Fahrers der Radlenkfunktion zur Verfügung zu stellen. Mittels der Radlenkfunktion werden einerseits die lenkbaren Fahrzeugräder des Kraftfahrzeugs gelenkt und andererseits werden mittels der Radlenkfunktion Straßenzustände an die Lenkrad-Feedbackfunktion übermittelt. Somit ergibt sich auf die vorgenannte Art und Weise ein ständiger Signalaustausch und/oder Datenaustausch zwischen den beiden vorgenannten Funktionen des Kraftfahrzeugs. Darüber hinaus ist es mittels der zusätzlichen Lenkradverstellfunktion möglich, das Lenkrad 24 in gewünschter Weise in dessen Neigung zu verstellen und bei Nichtgebrauch von dessen Gebrauchslage in dessen Verstaulage zu überführen. Wird das Lenkrad 24 benötigt, ist das Lenkrad 24 dann wieder mittels des Aktors 42 von dessen Verstaulage in dessen Gebrauchslage überführbar.

Wird das Lenkrad 24 des Kraftfahrzeugs beispielsweise manuell um die Lenksäule 26 gedreht, so wird diese Lenkbewegung des Lenkrads 24 mittels des mindestens einen mit dem Lenkrad 24 funktional verbundenen Sensors 8, 9, 32 auf an sich bekannte Art erfasst und als Ausgangssignale dieses mindestens einen Sensors 8, 9 auf an sich bekannte Weise an das jeweils korrespondierende Steuergerät 12, 14 des X-by-wire-Kontrollsystems 2 weitergeleitet. Um die zu der Hauptfunktion korrespondierende Leistungselektronik des Aktors ordnungsgemäß ansteuern zu können, ist es zusätzlich erforderlich, dass die aktuelle Lenklage des mindestens einen lenkbaren Rads des Kraftfahrzeugs bekannt ist. Diese aktuelle Lenklage wird mittels des mit dem vorgenannten Aktor funktional zusammenwirkenden mindestens einen Sensors 16, 18 ebenfalls auf dem Fachmann an sich bekannte Art und Weise erfasst und in Form von Ausgangssignalen des Sensors 16, 18, analog zu den oben genannten Ausgangssignalen, an die Recheneinheiten der beiden Steuergeräte 12, 14 zwecks Auswertung weitergeleitet. Nach der Auswertung aller Ausgangssignale erzeugt jede der Recheneinheiten der Steuergeräte 12, 14 ein zu diesen Ausgangssignalen korrelierendes Ansteuersignal, mit dem die zu der Hauptfunktion korrespondierende Leistungselektronik des Aktors ansteuerbar ist. Bei ordnungsgemäßer Funktion, also im Normalbetrieb der Steuergeräte 12, 14, sind die vorgenannten Ansteuersignale im Wesentlichen gleich.

Analoges gilt für die Lenkrad-Feedbackfunktion und die Lenkradverstellfunktion des X-by-wire-Kontrollsystems 2.

Aufgrund der erfindungsgemäßen Ausbildung des X-by-wire-Kontrollsystems 2 ist eine vollständige Funktionalität des X-by-wire-Kontrollsystems 2, trotz eines reduzierten technischen Aufwands durch hinsichtlich des Grades des zu erfüllenden Sicherheitsstandards getrennt voneinander aufgebaute Systembereiche, gewährleistet. Ferner ist auch weniger Bauraum für das X-by-wire-Kontrollsystem 2 im Vergleich zu funktional gleichwertigen X-by-wire-Kontrollsystemen aus dem Stand der Technik erforderlich, da bei dem erfindungsgemäßen X-by-wire-Kontrollsystem 2 beispielsweise wesentlich weniger Komponenten redundant ausgeführt werden müssen. Siehe hierzu zum Beispiel die den Stand der Technik wiedergebende Fig. 1 nebst der diesbezüglichen Erläuterungen. Somit ist das erfindungsgemäße X-by-wire-Kontrollsystem 2 im Vergleich zum Stand der Technik kompakter und kostengünstiger realisierbar. Auch ist die Vernetzung der einzelnen Komponenten des erfindungsgemäßen X-by-wire-Kontrollsystems 2 weniger komplex und damit weit weniger störanfällig, da beispielsweise redundante Funktionen und damit redundante Komponenten des erfindungsgemäßen X-by-wire-Kontrollsystems 2 lediglich dort vorgesehen werden, wo diese zwingend erforderlich sind. Im Ergebnis ist mittels der Erfindung eine im Vergleich zum Stand der Technik zwar funktional ebenso leistungsstarke, aber wesentlich vereinfachte mechanische und elektronische Anordnung verwirklicht. Dies gilt auch für die elektronische Verbindungstechnik.

Die Erfindung ist nicht auf das vorliegende Ausführungsbeispiel begrenzt.

Für weitere alternative oder optionale Merkmale bei zu dem vorliegenden Ausführungsbeispiel alternativen Ausführungsformen der Erfindung wird insbesondere auf die diesbezüglichen Ausführungen in der Beschreibungseinleitung sowie in der Beschreibung des konkreten Ausführungsbeispiels verwiesen.

### Bezugszeichenliste

- 2: X-by-wire-Kontrollsystem
- 4: Hauptfunktions-Baugruppe
- 6: Nebenfunktions-Baugruppe
- 8: Sensor
- 9: Sensor
- 10: Ein vom X-by-wire-Kontrollsystem verschiedener Rest des Kraftfahrzeugs
- 12: Steuergerät
- 14: Steuergerät
- 16: Sensor
- 18: Sensor
- 20: Steuergerät
- 22: Steuergerät
- 24: Lenkrad
- 26: Lenksäule
- 30: Recheneinheit
- 32: Sensor
- 34: Leistungselektronik
- 36: Aktor
- 38: Sensor
- 40: Leistungselektronik
- 42: Aktor
- 44: Erste Baueinheit der Hauptfunktions-Baugruppe
- 46: Erste Baueinheit der Nebenfunktions-Baugruppe
- 48: Zweite Baueinheit der Hauptfunktions-Baugruppe
- 50: Zweite Baueinheit der Nebenfunktions-Baugruppe

## Patentansprüche

1. X-by-wire-Kontrollsystem (2) eines Kraftfahrzeugs zur Kontrolle einer Hauptfunktion des Kraftfahrzeugs und einer vom zu erfüllenden Sicherheitsstandard im Vergleich zu der Hauptfunktion niedriger eingestuften Nebenfunktion des Kraftfahrzeugs, wobei die Hauptfunktion mittels einer Hauptfunktions-Baugruppe (4) des Kraftfahrzeugs und die Nebenfunktion mittels einer von der Hauptfunktions-Baugruppe (4) räumlich getrennten Nebenfunktions-Baugruppe (6) des Kraftfahrzeugs durchführbar sind, und wobei mindestens ein Sensor (8, 9) der Nebenfunktions-Baugruppe (6) funktional der Hauptfunktion zugeordnet ist,
**dadurch gekennzeichnet,**
**dass** dieser mindestens eine der Hauptfunktion zugeordnete Sensor (8, 9) der Nebenfunktions-Baugruppe (6) lediglich mit der Hauptfunktions-Baugruppe (4) einerseits in Energieversorgungsverbindung zur Versorgung dieses Sensors (8, 9) mit Betriebsenergie und andererseits in Signalaustauschverbindung steht.

2. X-by-wire-Kontrollsystem (2) nach Anspruch 1,
**dadurch gekennzeichnet,**
**dass** der Sicherheitsstandard der Hauptfunktion und der Nebenfunktion als ein ASIL-Sicherheitslevel ausgebildet ist, wobei das ASIL-Sicherheitslevel der Hauptfunktion als ASIL D und das ASIL-Sicherheitslevel der Nebenfunktion niedriger als ASIL D, bevorzugt niedriger oder gleich ASIL B, ausgebildet ist.

3. X-by-wire-Kontrollsystem (2) nach Anspruch 1 oder 2,
**dadurch gekennzeichnet,**
**dass** das X-by-wire-Kontrollsystem (2) als ein Steer-by-wire-Kontrollsystem ausgebildet ist, bevorzugt, dass das Steer-by-wire-Kontrollsystem als ein Lenksystem des Kraftfahrzeugs ausgebildet ist, wobei die kontrollierte Nebenfunktion als eine Lenkrad-Feedbackfunktion zur mechanischen Einwirkung mittels eines Lenkrads (24) des Kraftfahrzeugs auf einen Fahrer des Kraftfahrzeugs und die kontrollierte Hauptfunktion als eine Radlenkfunktion zur Lenkung mindestens eines Rades des Kraftfahrzeugs in Abhängigkeit eines von dem Fahrer eingeschlagenen Lenkwinkels des Lenkrads (24) ausgebildet sind.

4. X-by-wire-Kontrollsystem (2) nach Anspruch 3,
**dadurch gekennzeichnet,**
**dass** die Hauptfunktions-Baugruppe (4) kraftübertragend an dem mindestens einen lenkbaren Rad des Kraftfahrzeugs angeordnet ist, bevorzugt, dass die Hauptfunktions-Baugruppe (4) kraftübertragend an einer mit dem mindestens einem lenkbaren Rad kraftübertragend verbundenen Lenkachse des Kraftfahrzeugs angeordnet ist.

5. X-by-wire-Kontrollsystem (2) nach Anspruch 3 oder 4,
**dadurch gekennzeichnet,**
**dass** die Nebenfunktions-Baugruppe (6) kraftübertragend an dem Lenkrad (24) des Kraftfahrzeugs angeordnet ist, bevorzugt, dass die Nebenfunktions-Baugruppe (6) an einer mit dem Lenkrad (24) kraftübertragend verbundenen Lenksäule (26) des Kraftfahrzeugs angeordnet ist.

6. X-by-wire-Kontrollsystem nach Anspruch 1 oder 2,
**dadurch gekennzeichnet,**
**dass** das X-by-wire-Kontrollsystem als ein Brake-by-wire-Kontrollsystem ausgebildet ist, bevorzugt, dass die kontrollierte Hauptfunktion als eine Radbremsfunktion zur Bremsung mindestens eines Rades des Kraftfahrzeugs mittels eines Bremsaktors des vorgenannten Kontrollsystems in Abhängigkeit eines von einem Fahrer des Kraftfahrzeugs erteilten oder mittels des Kontrollsystems automatisch erzeugten Bremsbefehls ausgebildet ist.

7. X-by-wire-Kontrollsystem (2) nach einem der Ansprüche 1 bis 6,
**dadurch gekennzeichnet,**
**dass** die Hauptfunktions-Baugruppe (4) redundant ausgebildet ist, bevorzugt, dass die Hauptfunktions-Baugruppe (4) mindestens zwei Steuergeräte (12, 14) mit jeweils mindestens einer Recheneinheit zur Auswertung von an dem jeweiligen Steuergerät (12, 14) anliegenden Ausgangssignalen mindestens eines zu der Hauptfunktion korrespondierenden Sensors (8, 9, 16, 18) des X-by-wire-Kontrollsystems (2) und zur Ansteuerung mindestens einer Leistungselektronik eines zu der Hauptfunktion korrespondierenden Aktors des X-by-wire-Kontrollsystems (2) mittels Ansteuersignalen in Abhängigkeit der vorgenannten Ausgangssignale zur Ausführung dieser Hauptfunktion des Kraftfahrzeugs aufweist.

8. X-by-wire-Kontrollsystem (2) nach einem der Ansprüche 1 bis 7,
**dadurch gekennzeichnet,**
**dass** hinsichtlich der Nebenfunktions-Baugruppe (6) lediglich der mindestens eine der Hauptfunktion zugeordnete Sensor (8, 9) der Nebenfunktions-Baugruppe (6) redundant ausgebildet ist, bevorzugt, dass ein erster Sensor (8) dieses mindestens einen Sensors (8, 9) mit einem ersten Steuergerät (12) der Hauptfunktions-Baugruppe (4) und ein von dem ersten Sensor (8) verschiedener zweiter Sensor (9) dieses mindestens einen Sensors (8, 9) mit einem zweiten Steuergerät (14) der Hauptfunktions-Baugruppe (4) in Energieübertragungsverbindung und Signalübertragungsverbindung steht, besonders bevorzugt, dass die Nebenfunktions-Baugruppe (6) lediglich ein Steuergerät (20) mit lediglich einer einzigen Recheneinheit (30) zur Auswertung von an diesem Steuergerät (20) anliegenden Ausgangssignalen mindestens eines zu der Nebenfunktion korrespondierenden Sensors (32) des X-by-wire-Kontrollsystems (2) und zur Ansteuerung einer Leistungselektronik (34) eines zu der Nebenfunktion korrespondierenden Aktors (36) des X-by-wire-Kontrollsystems (2) mittels Ansteuersignalen in Abhängigkeit der vorgenannten Ausgangssignale zur Ausführung dieser Nebenfunktion des Kraftfahrzeugs aufweist.

9. X-by-wire-Kontrollsystem (2) nach Anspruch 8,
**dadurch gekennzeichnet,**
**dass** die Nebenfunktions-Baugruppe (6), zu einer weiteren Funktion des Kraftfahrzeugs korrespondierend, zusätzlich mindestens einen weiteren Sensor (38), eine weitere Leistungselektronik (40) und einen dazu korrespondierenden weiteren Aktor (42) aufweist und die vorgenannte Recheneinheit (30) zusätzlich zur Auswertung von an diesem Steuergerät (20) anliegenden Ausgangssignalen des mindestens einen weiteren Sensors (38) und zur Ansteuerung der weiteren Leistungselektronik (40) des weiteren Aktors (42) mittels Ansteuersignalen in Abhängigkeit der vorgenannten Ausgangssignale zur Ausführung dieser weiteren Funktion des Kraftfahrzeugs ausgebildet ist.

10. X-by-wire-Kontrollsystem (2) nach Anspruch 9,
**dadurch gekennzeichnet,**
**dass** die weitere Funktion als eine Lenkradverstellfunktion ausgebildet ist, bevorzugt, dass die Lenkradverstellfunktion zur Verstellung einer Neigung des Lenkrads (24) und/oder zur Überführung des Lenkrads (24) von einer Verstaulage des Lenkrads (24) in eine Gebrauchslage des Lenkrads (24) und umgekehrt geeignet ausgebildet ist.

11. X-by-wire Kontrollsystem (2) nach einem der Ansprüche 1 bis 10,
**dadurch gekennzeichnet,**
**dass** die Hauptfunktions-Baugruppe (4) und/oder die Nebenfunktions-Baugruppe (6) jeweils eine erste Baueinheit (44, 46) und eine von der ersten Baueinheit (44, 46) verschiedene zweite Baueinheit (48, 50) umfassen/umfasst, wobei in der ersten Baueinheit (44, 46) mindestens ein Sensor (16, 18; 8, 9, 32, 38) der jeweiligen Baugruppe (4, 6), bevorzugt alle Sensoren (16, 18; 8, 9, 32, 38) der jeweiligen Baugruppe (4, 6), und in der zweiten Baueinheit (48, 50) ein davon verschiedener Rest der jeweiligen Baugruppe (4, 6) baulich integriert ist.

## Claims

1. X-by-wire control system (2) of a motor vehicle for controlling a main function of the motor vehicle and for controlling a secondary function of the motor vehicle classified as lower than the main function with respect to the safety standard to be met, in which the main function can be performed by means of a main function assembly (4) of the motor vehicle and the secondary function by means of a secondary function assembly (6) of the motor vehicle that is spatially separated from the main function assembly (4), and in which at least one sensor (8, 9) of the secondary function assembly (6) is functionally assigned to the main function,
**characterised in that**
this at least one sensor (8, 9) of the secondary function assembly (6) assigned to the main function is connected to the main function assembly (4) only, on the one hand, in an energy supply connection for supplying this sensor (8, 9) with operating energy, and on the other hand in a signal exchange connection.

2. X-by-wire control system (2) according to claim 1,
**characterised in that**
the safety standard of the main function and of the secondary function is designed as an ASIL safety level, wherein the ASIL safety level of the main function is designed as ASIL D and the ASIL safety level of the secondary function is lower than ASIL D, preferably lower than or equal to ASIL B.

3. X-by-wire control system (2) according to claim 1 or 2,
**characterised in that**
the X-by-wire control system (2) is designed as a steer-by-wire control system, preferably that the steer-by-wire control system is designed as a steering system of the motor vehicle in which the controlled secondary function is designed as a steering wheel feedback function for mechanical action on a driver of the motor vehicle by means of a steering wheel (24) of the motor vehicle, and the controlled main function is designed as a wheel steering function for steering at least one wheel of the motor vehicle, depending on a steering angle of the steering wheel (24) turned by the driver.

4. X-by-wire control system (2) according to claim 3,
**characterised in that**
the main function assembly (4) is arranged in a force-transmitting manner on the at least one steerable wheel of the motor vehicle, preferably that the main function assembly (4) is arranged in a force-transmitting manner on a steering axle of the motor vehicle connected in a force-transmitting manner to the at least one steerable wheel.

5. X-by-wire control system (2) according to claim 3 or 4,
**characterised in that**
the secondary function assembly (6) is arranged in a force-transmitting manner on the steering wheel (24) of the motor vehicle, preferably that the secondary function assembly (6) is arranged on a steering column (26) of the motor vehicle connected in a force-transmitting manner to the steering wheel (24).

6. X-by-wire control system according to claim 1 or 2,
**characterised in that**
the X-by-wire control system is designed as a brake-by-wire control system,
preferably that the controlled main function is designed as a wheel brake function for braking at least one wheel of the motor vehicle by means of a brake actuator of the aforementioned control system depending on a brake command given by a driver of the motor vehicle or generated automatically by the control system.

7. X-by-wire control system (2) according to one of claims 1 to 6,
**characterised in that**
the main function assembly (4) is designed to be redundant, preferably that the main function assembly (4) has at least two control units (12, 14), each with at least one computing unit for evaluating output signals received at the respective control unit (12, 14) from at least one sensor (8, 9, 16, 18) of the X-by-wire control system (2) corresponding to the main function and for controlling at least one power electronics unit of an actuator of the X-by-wire control system (2) corresponding to the main function by means of control signals, depending on the aforementioned output signals, in order to perform this main function of the motor vehicle.

8. X-by-wire control system (2) according to one of claims 1 to 7,
**characterised in that**
with regard to the secondary function assembly (6), only the at least one sensor (8, 9) of the secondary function assembly (6) assigned to the main function is designed to be redundant, preferably that a first sensor (8) of this at least one sensor (8, 9) is in an energy transmission and signal transmission connection with a first control unit (12) of the main function assembly (4) and a second sensor (9) of this at least one sensor (8, 9), which is different from the first sensor (8), is in an energy transmission and signal transmission connection with a second control unit (14) of the main function assembly (4), particularly preferably that the secondary function assembly (6) comprises only one control unit (20) with only one single processing unit (30) for evaluating output signals received by this control unit (20) from at least one sensor (32) of the X-by-wire control system (2) corresponding to the secondary function and for controlling a power electronics unit (34) of an actuator (36) of the X-by-wire control system (2) corresponding to the secondary function by means of control signals, depending on the aforementioned output signals, in order to perform this secondary function of the motor vehicle.

9. X-by-wire control system (2) according to claim 8,
**characterised in that**
the secondary function assembly (6), corresponding to a further function of the motor vehicle, additionally has at least one further sensor (38), a further power electronics unit (40) and a further actuator (42) corresponding thereto, and that the aforementioned processing unit (30) is additionally designed to evaluate the output signals from the at least one further sensor (38) received by this control unit (20) and for controlling the further power electronics unit (40) of the further actuator (42) by means of control signals, depending on the aforementioned output signals, in order to perform this further function of the motor vehicle.

10. X-by-wire control system (2) according to claim 9,
**characterised in that**
the further function is designed as a steering wheel adjustment function, preferably that the steering wheel adjustment function is appropriately designed to adjust an inclination of the steering wheel (24) and/or to move the steering wheel (24) from a stowed position of the steering wheel (24) to a working position of the steering wheel (24) and vice versa.

11. X-by-wire control system (2) according to one of claims 1 to 10,
**characterised in that**
the main function assembly (4) and/or the secondary function assembly (6) each comprises a first assembly unit (44, 46) and a second assembly unit (48, 50) different from the first assembly unit (44, 46), whereby at least one sensor (16, 18; 8, 9, 32, 38) of the respective assembly (4, 6), preferably all sensors (16, 18; 8, 9, 32, 38) of the respective assembly (4, 6), is/are structurally integrated into the first assembly unit (44, 46), and that the remaining sensors of the respective assembly (4, 6) different from those above are integrated into the second assembly unit (48, 50).

## Revendications

1. Système de commande de X-by-wire (2) d'un véhicule automobile pour le contrôle d'une fonction principale du véhicule automobile et d'une fonction secondaire du véhicule automobile de classification inférieure par rapport au standard de sécurité à satisfaire par rapport à la fonction principale, la fonction principale pouvant être exécutée au moyen d'un ensemble de fonction principale (4) du véhicule automobile et la fonction secondaire au moyen d'un ensemble de fonction secondaire (6) du véhicule automobile, séparé spatialement de l'ensemble de fonction principale (4), et au moins un capteur (8, 9) de l'ensemble de fonction secondaire (6) étant affecté à la fonction principale,
**caractérisé en ce que**
au moins un capteur (8, 9) de l'ensemble de fonction secondaire (6) associé à la fonction principale est uniquement relié à l'ensemble de fonction principale (4) pour alimenter ce capteur (8, 9) en énergie pour son fonctionnement d'une part et pour l'échange de signaux d'autre part.

2. Système de commande de X-by-wire (2) selon la revendication 1,
**caractérisé en ce que**
le standard de sécurité de la fonction principale et de la fonction secondaire est conçu comme un niveau de sécurité ASIL, le niveau de sécurité ASIL de la fonction principale étant conçu comme ASIL D et le niveau de sécurité ASIL de la fonction secondaire étant inférieur à ASIL D, de préférence inférieur ou égal à ASIL B.

3. Système de commande de X-by-wire (2) selon la revendication 1 ou 2,
**caractérisé en ce que**
le système de commande de X-by-wire (2) est conçu comme un système de commande de direction assistée électrique, de préférence **en ce que** le système de commande de direction assistée électrique est conçu comme un système de direction du véhicule automobile, la fonction secondaire contrôlée étant conçue comme une fonction de rétroaction du volant pour l'action mécanique au moyen d'un volant (24) du véhicule automobile sur un conducteur du véhicule automobile et la fonction principale contrôlée étant conçue comme une fonction de direction de roue pour la direction d'au moins une roue du véhicule automobile en fonction d'un angle de braquage du volant de direction (24) adopté par le conducteur.

4. Système de commande de X-by-wire (2) selon la revendication 3,
**caractérisé en ce que**
l'ensemble de fonction principale (4) est disposé par transmission de force sur au moins une roue dirigeable du véhicule automobile, de préférence **en ce que** l'ensemble de fonction principale (4) est disposé par transmission de force sur un essieu directeur du véhicule automobile relié par transmission de force à au moins une roue dirigeable.

5. Système de commande de X-by-wire (2) selon la revendication 3 ou 4,
**caractérisé en ce que**
l'ensemble de fonction secondaire (6) est disposé par transmission de force sur le volant (24) du véhicule automobile, de préférence **en ce que** l'ensemble de fonction secondaire (6) est disposé sur une colonne de direction (26) du véhicule automobile reliée par transmission de force au volant (24).

6. Système de commande de X-by-wire selon la revendication 1 ou 2,
**caractérisé en ce que**
le système de commande de X-by-wire est conçu comme un système de freinage électrique, de préférence **en ce que** la fonction principale contrôlée est conçue comme une fonction de freinage de roue pour freiner au moins une roue du véhicule automobile au moyen d'un actionneur de frein du système de commande précité en fonction d'un ordre de freinage donné par un conducteur du véhicule automobile ou généré automatiquement au moyen du système de commande.

7. Système de commande de X-by-wire (2) selon l'une des revendications 1 à 6,
**caractérisé en ce que**
l'ensemble de fonction principale (4) est réalisé de manière redondante, de préférence **en ce que** l'ensemble de fonction principale (4) comprend au moins deux appareils de commande (12, 14) avec chacun au moins un processeur pour l'évaluation de signaux de sortie appliqués à l'appareil de commande respectif (12, 14) d'au moins un capteur (8, 9, 16, 18) correspondant à la fonction principale du système de commande de X-by-wire (2) et pour commander au moins une électronique de puissance d'un actionneur du système de commande de X-by-wire (2) correspondant à la fonction principale au moyen de signaux de commande en fonction des signaux de sortie précités pour l'exécution de cette fonction principale du véhicule automobile.

8. Système de commande de X-by-wire (2) selon l'une des revendications 1 à 7,
**caractérisé en ce que**
du point de vue de l'ensemble de fonction secondaire (6), au moins un seul capteur (8, 9) de l'ensemble de fonction secondaire (6) associé à la fonction principale est réalisé de manière redondante, de préférence **en ce qu'**un premier capteur (8) de ce capteur (8, 9) est relié par transmission d'énergie et de signaux avec un premier appareil de commande (12) de l'ensemble de fonction principale (4) et **en ce qu'**un deuxième capteur (9), différent du premier capteur (8), de ce capteur (8, 9) est relié par transmission d'énergie et de signaux avec un deuxième appareil de commande (14) de l'ensemble de fonction principale (4), en particulier de préférence **en ce que** l'ensemble de fonction secondaire (6) comprend uniquement un appareil de commande (20) avec uniquement un seul processeur (30) pour l'évaluation de signaux de sortie appliqués à cet appareil de commande (20) d'au moins un capteur (32) correspondant à la fonction secondaire du système de commande de X-by-wire (2) et pour commander une électronique de puissance (34) d'un actionneur (36) du système de commande de X-by-wire (2) correspondant à la fonction secondaire au moyen de signaux de commande en fonction des signaux de sortie précités pour l'exécution de cette fonction secondaire du véhicule automobile.

9. Système de commande de X-by-wire (2) selon la revendication 8,
**caractérisé en ce que**
l'ensemble de fonction secondaire (6), correspondant à une autre fonction du véhicule automobile, comprend en outre au moins un autre capteur (38), une autre électronique de puissance (40) et un autre actionneur (42) correspondant à celle-ci et **en ce que** le processeur (30) susmentionné est conçu en outre pour l'évaluation de signaux de sortie d'au moins un autre capteur (38) appliqués à cet appareil de commande (20) et pour la commande de l'autre électronique de puissance (40) de l'autre actionneur (42) au moyen de signaux de commande en fonction des signaux de sortie susmentionnés pour l'exécution de cette autre fonction du véhicule automobile.

10. Système de commande de X-by-wire (2) selon la revendication 9,
**caractérisé en ce que**
l'autre fonction est réalisée sous la forme d'une fonction de réglage du volant, de préférence **en ce que** la fonction de réglage du volant est réalisée de manière appropriée pour régler une inclinaison du volant (24) et/ou pour faire passer le volant (24) d'une position de rangement du volant (24) à une position d'utilisation du volant (24) et inversement.

11. Système de commande de X-by-wire (2) selon l'une des revendications 1 à 10,
**caractérisé en ce que**
l'ensemble de fonction principale (4) et/ou l'ensemble de fonction secondaire (6) comprend respectivement une première unité (44, 46) et une deuxième unité (48, 50), différente de la première unité (44, 46), avec, dans la première unité (44, 46), au moins un capteur (16, 18 ; 8, 9, 32, 38) de l'ensemble respectif (4, 6), de préférence tous les capteurs (16, 18 ; 8, 9, 32, 38) de l'ensemble respectif (4, 6) intégré dans la première unité et un reste différent de l'ensemble respectif (4, 6) intégré dans la deuxième unité (48, 50).
